# EUROPEAN PATENT SPECIFICATION

(11) **EP 2 730 582 B1**
(45) Date of publication and mention of the grant of the patent: **07.09.2016**
(21) Application number: 12807000.0
(22) Date of filing: 02.07.2012
(51) Int. Cl.: C07F 9/54, C07F 7/08

(54) **IONIC LIQUID**
IONISCHE FLÜSSIGKEIT
LIQUIDE IONIQUE

(30) Priority: 04.07.2011 JP 2011147937
(43) Date of publication of application: 14.05.2014
(73) Proprietor: Nisshinbo Holdings Inc., Tokyo 103-8650 (JP)
(72) Inventor: MASUDA, Gen, Chiba-shi Chiba 267-0056 (JP)
(74) Representative: Bailey, Sam Rogerson
(86) International application number: PCT/JP2012/066857
(87) International publication number: WO 2013/005712

(56) References cited:
- WO-A1-03/051894
- WO-A1-2004/013218
- JP-A- 2004 515 351
- JP-A- 2005 535 690
- JP-A- 2006 236 829
- JP-A- 2008 231 033
- JP-A- 2010 070 539
- JP-A- 2010 285 398

## Description

### TECHNICAL FIELD

The present invention relates to an ionic liquid. More specifically, the invention relates to an ionic liquid composed of tetraalkylphosphonium cations and trialkylsilyl group-containing alkylsulfonic acid anions.

### BACKGROUND ART

Most ionic liquids known to date contain halogen atoms such as fluorine atoms on the anions, and thus pose a problem in terms of their environmental impact. In addition, production costs are high. Improvements in these areas have been desired.

In light of the above, ionic liquids of types that do not contain halogen atoms have also been developed (see, for example, Patent Documents 1 and 2). However, compared to ionic liquids which contain fluorine atoms, these have drawbacks such as a high viscosity and a low heat resistance (low decomposition point).

In general, many ionic liquids exhibit hydrophilic properties, although such hydrophilicity itself is often a problem, as in cases where there is a desire to lower the water content and in cases where separation with water is required.

Hence, ionic liquids possessing hydrophobicity to an extent such as to undergo phase separation with water have also been developed (see, for example, Patent Document 3). However, these ionic liquids include fluorine atoms.

WO 2004/013218 A1 discloses tetra-n-butylphosphonium 3-trimethylsilylpropanesulfonate and its use as additive.

Accordingly, ionic liquids which are halogen-free, have an excellent heat resistance, and moreover possess hydrophobic properties have not hitherto been known.

### PRIOR-ART DOCUMENTS

### PATENT DOCUMENTS

Patent Document 1: JP-A 2005-82534
Patent Document 2: JP-A 2005-232019
Patent Document 3: JP-A 2005-314332
Patent Document 4: JP-A 2005-535690
Patent Document 5: JP-A 2009-543105

### SUMMARY OF THE INVENTION

### PROBLEMS TO BE SOLVENT BY THE INVENTION

It is therefore an object of the present invention to provide an ionic liquid which does not contain halogen atoms, has an excellent heat stability, and exhibits hydrophobic properties.

### MEANS FOR SOLVING THE PROBLEMS

The inventor, as a result of conducting extensive investigations aimed at achieving the above objects, has discovered that a salt which is composed of an asymmetric tetraalkylphosphonium cation having relatively long alkyl chains and a trialkylsilyl group-containing alkylsulfonic acid anion forms an ionic liquid. The inventor has also discovered that this ionic liquid, in spite of being halogen-free, has a good heat stability and also exhibits hydrophobic properties.

It should be noted that salts composed of trialkylsilyl group-containing alkylsulfonic acid anions and onium ions have been disclosed in, for example, Patent Documents 4 and 5, but such salts are not ionic liquids.

Accordingly, the invention provides:
1. An ionic liquid characterized by including a phosphonium salt of formula (1) 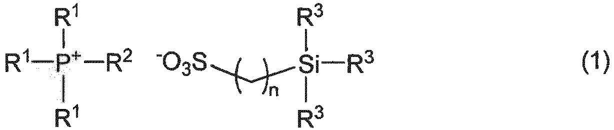 wherein R¹ is an alkyl group of 1 to 10 carbons, R² is a straight -chain alkyl group of 12 to 20 carbons, R³ is an alkyl group of 1 to 8 carbons, and n is an integer from 1 to 12;
2. The ionic liquid of claim 1, wherein R¹ is a straight-chain alkyl group of 2 to 8 carbons.
3. The ionic liquid of 1 or 2 above, wherein R¹ is n-butyl;
4. The ionic liquid of any one of 1 to 3 above, wherein R³ is methyl; and
5. The ionic liquid of any one of 1 to 4 above, wherein n is 3.

### ADVANTAGEOUS EFFECTS OF THE INVENTION

The ionic liquid of the invention is halogen-free, has little environment impact and, in spite of being halogen-free, has a good heat resistance.

In addition, the ionic liquid of the invention exhibits hydrophobic properties and thus has the advantage that it can be easily separated from water.

### BRIEF DESCRIPTION OF THE DIAGRAMS

FIG. 1 is an ¹H-NMR spectrum of Compound (1) obtained in Example 1.
FIG. 2 is a chart showing the decomposition point of Compound (1) obtained in Example 1.
FIG. 3 is an ¹H-NMR spectrum of Compound (2) obtained in Example 2.
FIG. 4 is a chart showing the decomposition point of Compound (2) obtained in Example 2.

### BEST MODE FOR CARRYING OUT THE INVENTION

The invention is described more fully below.

In above formula (1), the alkyl group of 1 to 10 carbons may be straight-chained, branched or cyclic, and is exemplified by methyl, ethyl, n-propyl, i-propyl, c-propyl, n-butyl, i-butyl, s-butyl, t-butyl, c-butyl, n-pentyl, c-pentyl, n-hexyl, c-hexyl, n-heptyl, n-octyl, n-nonyl and n-decyl.

The alkyl group of 12 to 20 carbons is exemplified by n-dodecyl, n-tridecyl, n-tetradecyl, n-pentadecyl, n-hexadecyl, n-heptadecyl, n-octadecyl, n-nonadecyl and n-eicosyl.

The alkyl group of 1 to 8 carbons may be straight-chained, branched or cyclic, and is exemplified by the same groups as those having from 1 to 8 carbons mentioned above as examples of alkyl groups of 1 to 10 carbons.

In particular, in this invention, R¹ is preferably a straight-chain alkyl group of 2 to 8 carbons, more preferably a straight-chain alkyl group of 3 to 8 carbons, and even more preferably a straight-chain alkyl group of 4 to 8 carbons. Taking into account such factors as the properties (hydrophobicity, heat resistance) and production costs of the ionic liquid of the invention, n-butyl is most preferred.

Taking into account the properties (hydrophobicity, heat resistance) of the ionic liquid of the invention, R² is a straight-chain alkyl group of 12 to 20 carbons.

R³ is preferably an alkyl group of 1 to 4 carbons, more preferably an alkyl group of 1 to 3 carbons, and most preferably methyl.

The letter n is preferably from 1 to 8, more preferably from 2 to 6, and even more preferably 2 or 3. From the standpoint of cost, n is most preferably 3.

The ionic liquid of the invention can be produced by reacting a trialkylsilyl group-containing alkylsulfonate with a tetraalkylphosphonium halide of the formula R¹₃R²PX (where X is a halogen atom) within a solvent.

Here, a sodium salt potassium salt or silver salt may be used as the sulfonate.

Examples of the halogen atom include fluorine, chlorine, bromine and iodine. A chlorine atom or a bromine atom is preferred.

The solvent may be either water or an organic solvent. However because the ionic liquid of the invention that has been formed is hydrophobic and separates with water into two phases, the use of water facilitates operations such as product separation.

In the above reaction, the R¹₃R²PX (where X is a halogen atom) and the trialkylsilyl group-containing alkylsulfonate are used in a ratio, expressed as a molar ratio, which may be set to from about 5:1 to about 1:5. Use in a ratio close to 1:1 is generally preferred.

Following reaction completion, the target product can be obtained by carrying out an ordinary work-up.

Another example of a method of producing the ionic liquid of the invention is a neutralization method which uses an ion-exchange resin.

In such a neutralization method, first the trialkylsilyl group-containing alkylsulfonate and the tetraalkylphosphonium salt of the formula R¹₃R²PX are converted, by using, respectively, a cation-exchange resin and an anion-exchange resin, to a trialkylsilyl group-containing alkylsulfonic acid and a tetraalkylphosphonium hydroxide, following which the two products are mixed together.

When this neutralization method is employed in the invention, there are no particular limitations on the sulfonic acid, the phosphonium salt, and also, insofar as ion exchange occurs, the counterions. However, from the standpoint of cost, the sulfonate is preferably a sodium salt or potassium salt.

The counterion for the phosphonium salt is preferably a halogen ion. From the standpoint of cost, a chlorine ion or bromine ion is especially preferred.

The molar ratio of the trialkylsilyl group-containing alkylsulfonic acid and the tetraalkylphosphonium hydroxide in the neutralization reaction is not particularly limited, and may be set to from about 5:1 to about 1:5. From the standpoint of cost, it is preferable for the reaction to be carried out at a ratio close to 1:1, and it is especially preferable to use the point of neutralization of the aqueous phase as the reaction endpoint.

The ionic liquid of the invention can be easily obtained because the organic phase that forms following mixture of the trialkylsilyl group-containing alkylsulfonic acid with the tetraalkylphosphonium hydroxide separates from the aqueous phase.

The ionic liquid of the invention described above has such a degree of hydrophobicity that, when mixed with an equal volume of water, the mixture completely separates into two phases. For this reason, it is useful as a reaction solvent or an extraction solvent. In particular, because it is a halogen-free ionic liquid, it is useful as a green solvent having a low environment impact.

In addition, the ionic liquid of the invention can be used as an electrolyte (electrolytic solution) for power storage devices, or as an antistatic agent or plasticizer for addition to polymer materials such as rubbers and plastics. In particular, because the ionic liquid of the invention has a good thermal stability, it can be advantageously used as an electrolyte (electrolytic solution) in devices which are required to be heat resistant, and as antistatic agents or plasticizers used in components made of polymer materials required to be heat resistant.

### EXAMPLES

Examples of the invention are given below by way of illustration, although the invention is not limited by the following Examples.

The analytical instruments and conditions used in the examples were as follows.

### [1] ¹H-NMR Spectrum

Instrument: AL-400, from JEOL Ltd.
Solvent: Deuterated chloroform

### [2] Melting Point and Tg

Instrument: DSC 6200, from Seiko Instruments, Inc.
Measurement conditions:
   Measured while raising the temperature 10°C/min from 20°C to 60°C, lowering the temperature 1°C/min from 60°C to -90°, holding the temperature at -90°C for 1 minute, then raising the temperature 1°C/min from -90°C to 60°C.

### [3] Decomposition Point

Instrument: TG-DTA 6200, from Seiko Instruments, Inc.
Measurement conditions:
   Measured in an air atmosphere while raising the temperature 10°C/min from 30°C to 500°C.

### Example 1

### Synthesis of Compound (1)

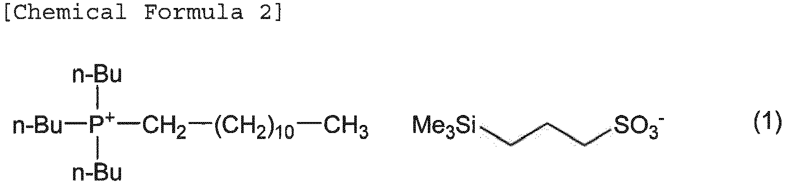

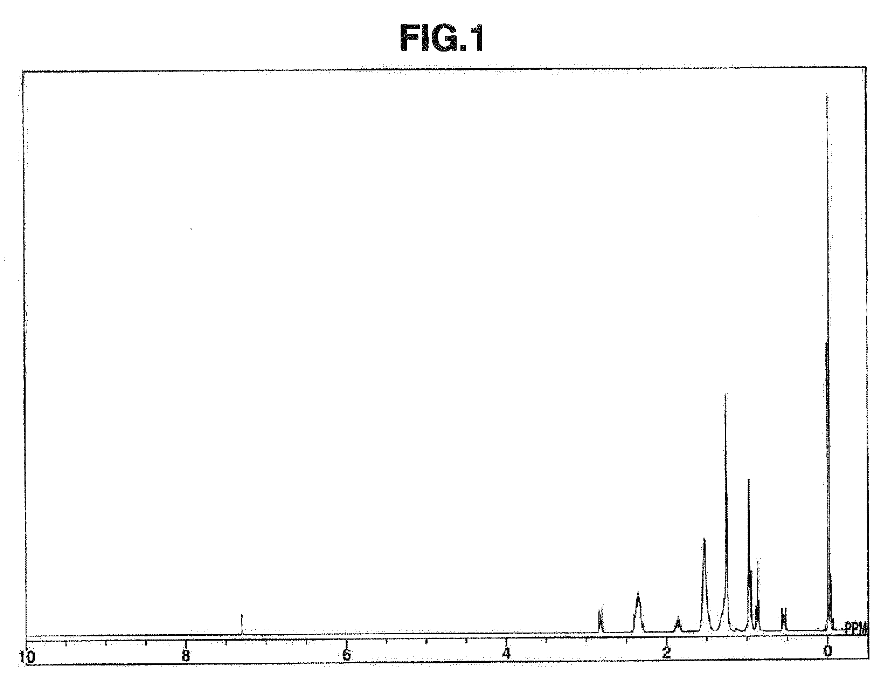

3-(Trimethylsilyl)-1-propanesulfonic acid sodium salt (Sigma-Aldrich), 1.00 g, was dissolved in 120 mL of ion-exchanged water. To this solution was added an already prepared solution of 2.03 g of tributyldodecylphosphonium bromide (Tokyo Chemical Industry Co., Ltd.) dissolved in 80 mL of ion-exchanged water, and the resulting mixture was stirred overnight at room temperature. The reaction mixture at this time was initially cloudy; when left at rest following overnight reaction, the mixture separated into two phases. Ethyl acetate (Wako Pure Chemical Industries Co., Ltd.), 50 mL, was added to this reaction mixture and extraction of the organic phase was carried out. This operation was repeated twice, following which the organic phases were combined and washed twice with 50 mL of ion-exchanged water. About 20 g of potassium carbonate (Wako Pure Chemical Industries, Ltd.) was added to the organic phase to effect drying and the solids were removed by filtration, following which the solvent was distilled off, giving 2.22 g (yield, 87%) of the target substance, Compound (1), as a clear, colorless liquid. FIG. 1 shows the ¹H-NMR spectrum of Compound (1).

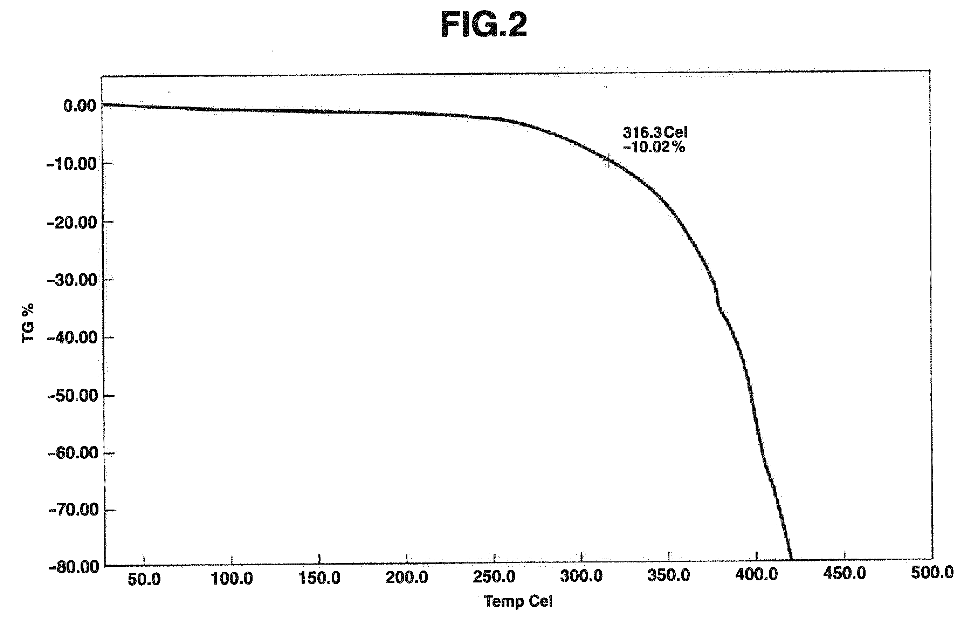

A melting point was not observed for this compound, but the glass transition point (Tg) was -63°C. As shown in FIG. 2, the decomposition point was 316°C (10%).

In addition, when this Compound (1) was mixed with an equal volume of water, the mixture separated completely into two phases, confirming that Compound (1) is hydrophobic.

### Example 2

### Synthesis of Compound (2)

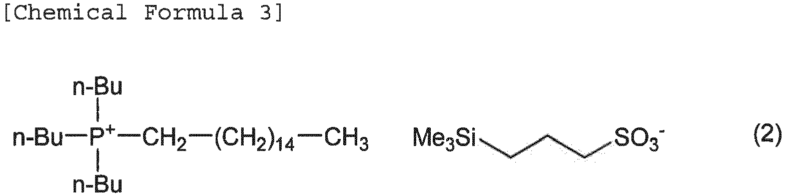

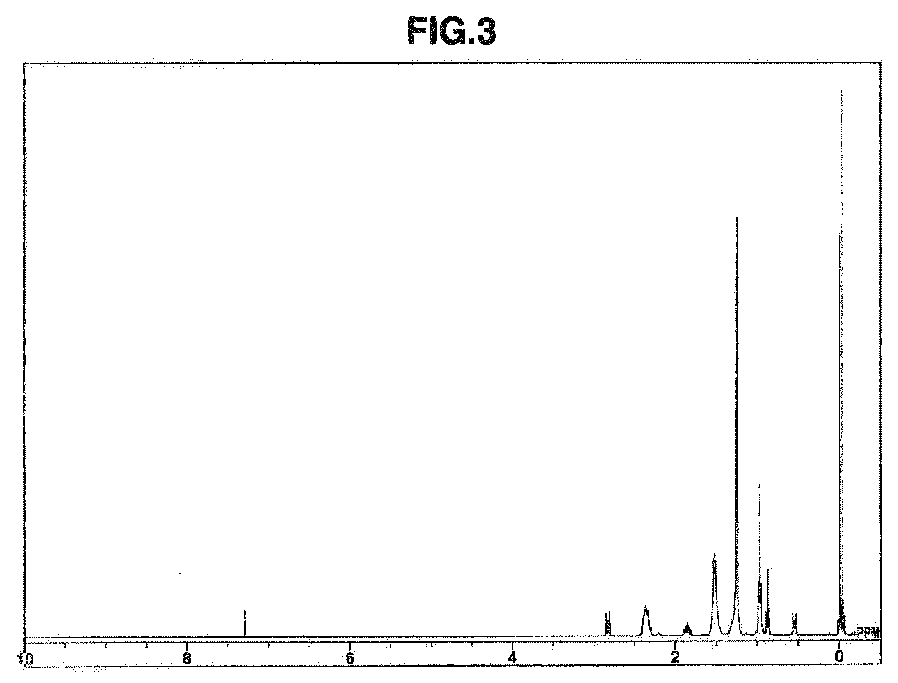

Aside from changing the 2.03 g of tributyldodecylphosphonium bromide to 2.28 g of tributylhexadecylphosphonium bromide (Tokyo Chemical Industry Co., Ltd.), the same operations were carried out as in Example 1, giving 2.12 g (yield, 77%) of Compound (2) as a clear, colorless liquid. FIG. 3 shows the ¹H-NMR spectrum of Compound (2).

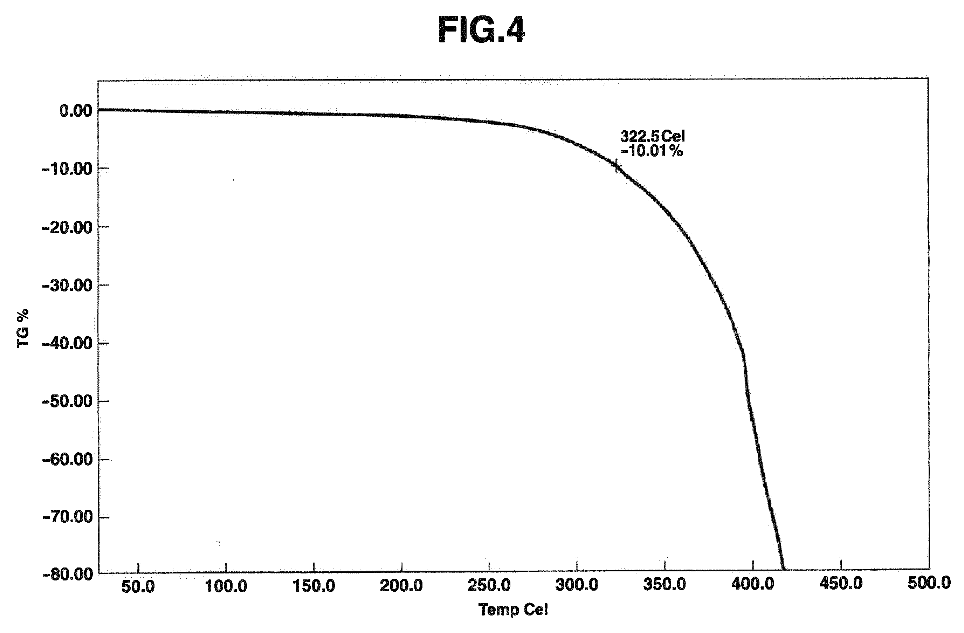

The melting point of this compound was -41°C. As shown in FIG. 4, the decomposition point was 322°C (10%).

In addition, when this Compound (2) was mixed with an equal volume of water, the mixture separated completely into two phases, confirming that Compound (2) is hydrophobic.

## Claims

1. An ionic liquid **characterized by** comprising a phosphonium salt of formula (1) 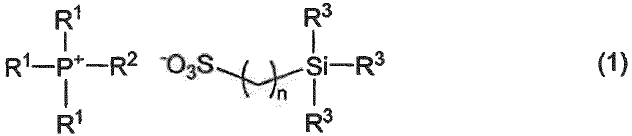 wherein R¹ is an alkyl group of 1 to 10 carbons, R² is a straight-chain alkyl group of 12 to 20 carbons, R³ is an alkyl group of 1 to 8 carbons, and n is an integer from 1 to 12.

2. The ionic liquid of claim 1, wherein R¹ is a straight-chain alkyl group of 2 to 8 carbons.

3. The ionic liquid of claim 1 or 2, wherein R¹ is n-butyl.

4. The ionic liquid of any one of claims 1 to 3, wherein R³ is methyl.

5. The ionic liquid of any one of claims 1 to 4, wherein n is 2 or 3.

6. The ionic liquid of any one of claims 1 to 4, wherein n is 3.

7. The ionic liquid of claim 1 wherein said phosphonium salt is represented by the following formula: 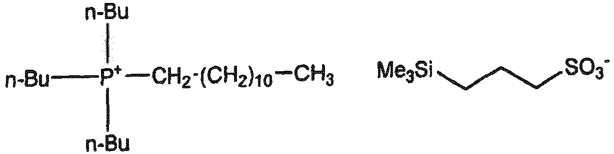 wherein Bu stands for butyl group and Me stands for methyl group.

8. The ionic liquid of claim 1 wherein said phosphonium salt is represented by the following formula: 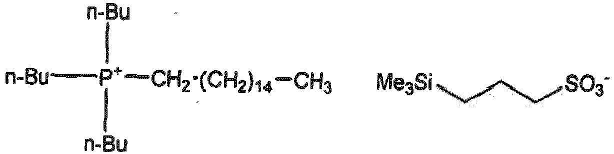 wherein Bu stands for butyl group and Me stands for methyl group.

## Patentansprüche

1. Ionische Flüssigkeit, **dadurch gekennzeichnet, dass** sie ein Phosphoniumsalz der Formel (1) umfasst: 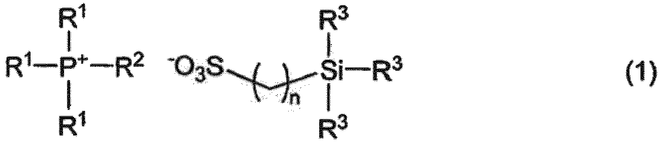 worin R¹ eine Alkylgruppe mit 1 bis 10 Kohlenstofifatomen ist, R² eine unverzweigte Alkylgruppe mit 12 bis 20 Kohlenstofifatomen ist, R³ eine Alkylgruppe mit 1 bis 8 Kohlenstofifatomen ist und n eine ganze Zahl von 1 bis 12 ist.

2. Ionische Flüssigkeit nach Anspruch 1, worin R¹ eine unverzweigte Alkylgruppe mit 2 bis 8 Kohlenstoffatomen ist.

3. Ionische Flüssigkeit nach Anspruch 1 oder 2, worin R¹ n-Butyl ist.

4. Ionische Flüssigkeit nach einem der Ansprüche 1 bis 3, worin R³ Methyl ist.

5. Ionische Flüssigkeit nach einem der Ansprüche 1 bis 4, worin n = 2 oder 3 ist.

6. Ionische Flüssigkeit nach einem der Ansprüche 1 bis 4, worin n = 3 ist.

7. Ionische Flüssigkeit nach Anspruch 1, worin das Phosphoniumsalz durch die nachstehende Formel dargestellt ist: 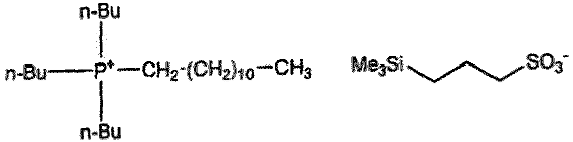 worin Bu für Butylgruppe und Me für Methylgruppe steht.

8. Ionische Flüssigkeit nach Anspruch 1, worin das Phosphoniumsalz durch die nachstehende Formel dargestellt ist: 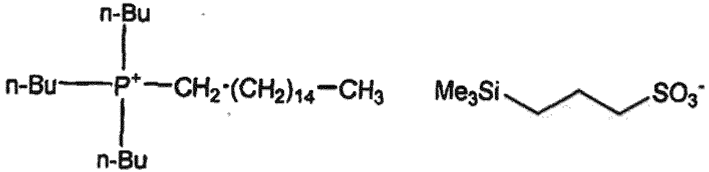 worin Bu für Butylgruppe und Me für Methylgruppe steht.

## Revendications

1. Liquide ionique **caractérisé en ce qu'**il comprend un sel de phosphonium de formule (1) 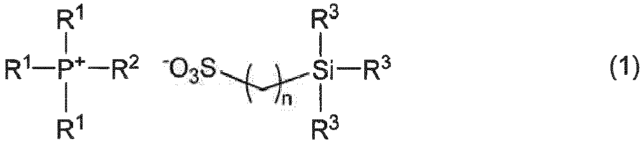 dans laquelle R¹ est un groupe alkyle ayant 1 à 10 atomes de carbone, R² est un groupe alkyle à chaîne droite ayant 12 à 20 atomes de carbone, R³ est un groupe alkyle ayant 1 à 8 atomes de carbone, et n est un entier de 1 à 12.

2. Liquide ionique selon la revendication 1, dans lequel R¹ est un groupe alkyle à chaîne droite ayant 2 à 8 atomes de carbone.

3. Liquide ionique selon la revendication 1 ou 2, dans lequel R¹ est n-butyle.

4. Liquide ionique selon l'une quelconque des revendications 1 à 3, dans lequel R³ est méthyle.

5. Liquide ionique selon l'une quelconque des revendications 1 à 4, dans lequel n vaut 2 ou 3.

6. Liquide ionique selon l'une quelconque des revendications 1 à 4, dans lequel n vaut 3.

7. Liquide ionique selon la revendication 1, dans lequel ledit sel de phosphonium est représenté par la formule suivante : 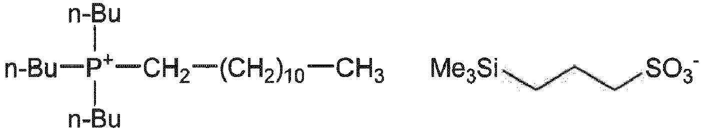 dans laquelle Bu désigne le groupe butyle et Me désigne le groupe méthyle.

8. Liquide ionique selon la revendication 1, dans lequel ledit sel de phosphonium est représenté par la formule suivante : 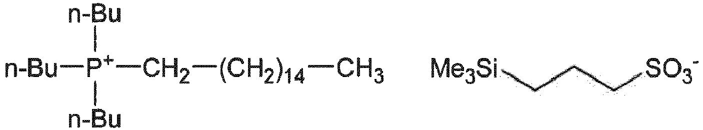 dans laquelle Bu désigne le groupe butyle et Me désigne le groupe méthyle.
